(19) Europäisches Patentamt
European Patent Office
Office européen des brevets

(11) **EP 2 884 320 B1**

(12) **EUROPEAN PATENT SPECIFICATION**

(45) Date of publication and mention
of the grant of the patent:
**21.03.2018 Bulletin 2018/12**

(51) Int Cl.:
**G02B 6/44** (2006.01)    **G02B 6/04** (2006.01)
**G02B 1/04** (2006.01)

(21) Application number: **13827516.9**

(86) International application number:
**PCT/JP2013/070501**

(22) Date of filing: **29.07.2013**

(87) International publication number:
**WO 2014/024720 (13.02.2014 Gazette 2014/07)**

(54) **STRAND FOR COMBINING INTO OPTICAL FIBER UNIT**

STRANG ZUR INTEGRATION IN EINE GLASFASEREINHEIT

BRIN À COMBINER POUR DONNER UNE UNITÉ DE FIBRE OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.08.2012 JP 2012177326**

(43) Date of publication of application:
**17.06.2015 Bulletin 2015/25**

(73) Proprietor: **Fujikura Ltd.**
**Tokyo 135-8512 (JP)**

(72) Inventors:
• **TANI, Naosuke**
  **Chuo-ku, Tokyo 103-0006 (JP)**
• **KATO, Yasushi**
  **Chuo-ku, Tokyo 103-0006 (JP)**
• **OKADA, Naoki**
  **Sakura-shi, Chiba 285-8550 (JP)**
• **SHIOBARA, Satoru**
  **Sakura-shi, Chiba 285-8550 (JP)**
• **OHNO, Masashi**
  **Sakura-shi, Chiba 285-8550 (JP)**

(74) Representative: **Cabinet Plasseraud**
**66, rue de la Chaussée d'Antin**
**75440 Paris Cedex 09 (FR)**

(56) References cited:
EP-A1- 1 731 641        JP-A- 2002 180 330
JP-A- 2007 010 917      JP-A- 2011 242 592
JP-A- 2013 037 253      US-A1- 2002 034 367

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a binder fiber that binds optical fiber cores of an optical fiber cable into one unit, and particularly relates to a binder fiber for an optical fiber unit which is superior in color discriminability and unit shape retaining properties.

BACKGROUND ART

In the related art, an optical cable which contains an optical fiber bundle (unit) into which optical fiber cores are integrated by press-winding is disclosed, and various press-winding materials are studied.

For example, it is disclosed that non-woven fabric, a tape-like material, or a filament material is used as a press-winding material for binding optical fiber cores into an optical fiber unit. Also, nylon, polyethylene terephthalate (PET), or the like is used as a raw material of the press-winding material. In addition, it is disclosed that press-winding materials are colored to discriminate optical fiber units from each other.

When optical fiber bundles obtained by winding bundles of optical fiber cores in a spiral shape using a tape or a filament are integrated into a cable, the optical fiber bundles are pressed by heat generated during formation of a cable jacket or shrinkage caused during drying, which causes a problem of optical transmission loss. In order to solve this problem, Patent Document 1 discloses an optical cable in which a press-winding material is formed of a material for decreasing tension and is in a state where the tension decreases. The tape or the filament which is the press-winding material of the optical cable disclosed in Patent Document 1 is in a state where the tension decreases due to its thermal history, and three specific examples are disclosed. A first specific example is a press-winding material which is obtained by mixing paraffin or the like having a melting point of 60°C to 80°C with short-fiber cellulose or short-fiber cotton and extruding the mixture. A second specific example is a low elastic rubber which is obtained by extruding and crosslinking non-crosslinked natural rubber to have a crosslinking degree of 20% to 40%, in which the crosslinking density is low, and creeping occurs at about 70°C. A third specific example is a press-winding material which is obtained by melting and molding a polyester fiber, which contains at least 10% of a compound such as paraffin having a melting point of 100°C or lower as a plasticizer, and then heating the molded product to remove processing strain therefrom.

In addition, Patent Document 2 discloses that, when optical fiber ribbons are bound into a ribbon unit without being twisted, the optical fiber ribbons are wound by a tape-like band or a filament fiber to obtain a bundle. Ribbon units can be distinguished from each other by distinguishing colors of tape-like bands or filament fibers from each other. However, in Patent Document 1, an adverse effect caused by the pressing of a wiring filament or tape against optical fibers after integration into a cable can be solved. However, regarding fitting properties in which optical fibers are maintained in a state of being closely bound and integrated into a unit, optical fibers are wound by a wiring material in a loose state, and thus convex and concave portions formed by the wiring material may adversely affect optical transmission.

In addition, when a wiring yarn is cut at an intermediate portion of a cable due to an issue regarding an appropriate wiring pitch during integration into a cable or due to a branching process after integration into a cable, an optical fiber bundle on both sides of the cut portion is loosened, and optical fiber cores are scattered. As a result, there are problems in that branching workability and connecting workability deteriorate. On the other hand, in order to maintain smooth wiring workability required for integration into a unit, it is necessary to use a wiring yarn or a tape having a small thickness.

However, when a discrimination process or a branching and connecting process is performed using a lamp in a dark place such as an underground manhole or a utility tunnel, a wiring thread or a tape having a small thickness has a problem, in particular, in color discriminability. In addition, during production of yarn, the number of processes such as mixing with short fiber increases, and paraffin or the like is added. As a result, there are problems in productivity, for example, a decrease in spinning safety.

In addition, Patent Document 2 does not disclose performance and characteristics regarding conditions of a wire such as a tape-like band or a filament fiber which is used when ribbons are integrated into a bundle. Patent Document 3 discloses an optical fiber cable including an assembly of buffer tubes with at least two flexible buffer tubes that are compactly held together by adhesion. Further it is specified that the cable includes a plurality of optical fibers housed within the buffer tubes, a jacket and at least one longitudinal strength member at the periphery of the assembly of buffer tubes. Patent Document 4 is related to an optical fiber cable configured such that a jacket can suppress cicada's piercing without using a protecting body or the like. Also the fiber is cold-resistance and flame-resistance. Patent Document 5 discloses a woven fabric and articles made of the same. More specifically, it relates to a woven fabric for use as covers such as a building material cover (a waterproof sheet, a packaging bag, a flexible container and so on).

EP-A1-2002/0034367 discloses a binder fiber for an optical fiber unit comprising a flat sea-island composite.

As described above, in the related art, there is no binder fiber which is satisfactory in processibility during spiral winding, cost, shape retaining properties of an optical fiber core unit, and color discriminability.

[Patent Document 1] Japanese Unexamined Patent Application, First Publication No. H09-049950

[Patent Document 2] Japanese Unexamined Patent Application, First Publication No. 2007-233252

[Patent Document 3] US Patent Application No. 2002/034367 A1, published on March 21, 2002

[Patent Document 4] Japanese Patent Application No. 2011242592 A, published on December 1,2011

[Patent Document 5] European Patent Application No. 1731641 A1, published on December 13,2006

DISCLOSURE OF INVENTION

The present invention has been made in order to provide a binder fiber for an optical fiber unit, that is, a binder fiber which can solve the above-described problems, particularly, to provide a binder fiber for an optical fiber unit which can achieve the following four goals.

(1) During a branching process in a dark place, the color developing properties of a binder fiber are improved to distinguish optical fiber units from each other.

(2) From the viewpoint of a cable cost, a bundle of optical fiber cores is wound by one binder fiber in a spiral shape instead of using a plurality of binder fibers having adhesion at intersections. As a result, even during the cutting of a binder fiber which is performed during an optical fiber core branching process, the shape retaining properties of optical fiber cores are maintained before and after the branching of an optical fiber unit within a range where there is no problem in workability.

(3) A binder fiber does not compress optical fiber cores during integration into a cable. That is, the binder fiber has a low thermal shrinkage rate after being heated during processing.

(4) From the viewpoints of discriminability and workability, a surface of a binder fiber is not melted by heat generated during integration into a cable. That is, optical fiber cores are not thermally fused to a binder fiber by which an adjacent optical fiber unit is wound.

In order to achieve the above-described problems, the present inventors have thoroughly studied a binder fiber having the following characteristics: (1) the color developing properties of the binder fiber are improved; (2) by a bundle of optical fiber cores being wound by one binder fiber in a spiral shape, the shape of an optical fiber unit in which optical fiber cores or ribbons are bound is maintained before and after the branching of the optical fiber unit within a range where there is no problem in workability; (3) the binder fiber does not compress optical fiber cores during integration into a cable; and (4) a surface of the binder fiber is not melted during integration into a cable. Based on this study, the present invention has been completed.

That is, according to the present invention, the following [1] to [4] are provided.

[1] A binder fiber for an optical fiber unit according to claim 1.

[2] The binder fiber for an optical fiber unit according to [1],
in which the core-sheath color composite spun fiber further includes a pigment which is mixed with the sheath-component resin and colors the core-sheath color composite spun fiber.

[3] The binder fiber for an optical fiber unit according to [1] or [2],
in which the sheath-component resin of the core-sheath color composite spun fiber is a single compound or a mixture of two or more compounds selected from polyethylene, two-component copolymers of ethylene or butene and propylene, and three-component polymers of ethylene, butene, and propylene, and
the core-component resin is one selected from crystalline polypropylene, polyethylene terephthalate, and polyamide.

[4] The binder fiber for an optical fiber unit according to any one of [1] to [3],
in which the sheath-component resin of the core-sheath color composite spun fiber is an ethylene-propylene random copolymer which is obtained by polymerization using a metallocene catalyst.

BRIEF DESCRIPTION OF THE DRAWINGS

FIG. 1 is a DSC chart of a binder fiber according to Example 1 of the present invention.
FIG. 2 is a DSC chart of a binder fiber according to Comparative Example 2.
FIG. 3 is a DSC chart of a binder fiber according to Comparative Example 7.
FIGS. 4(a) and 4(b) are a schematic cross-sectional view and a partially enlarged image, respectively, showing a binder fiber according to the present invention.
FIG. 5(a) is an enlarged schematic diagram of a cross-section showing a state where the binder fiber according to the present invention binds optical fiber cores into an optical fiber core unit by spiral winding, and FIG. 5(b) is a perspective view schematically showing the optical fiber core unit.
FIG. 6 is a schematic cross-sectional view showing a central tube type optical fiber cable in which a plurality of optical fiber units (5 units) are bound using the binder fiber according to the present invention.
FIG. 7 is an image showing one surface of the binder fiber according to the present invention on which convex and concave portions are formed.

DESCRIPTION OF THE REFERENCE SYMBOLS

1: SEA COMPONENT (COLORED)
2: ISLAND COMPONENT
10: BINDER FIBER
20: OPTICAL FIBER UNIT
21: OPTICAL FIBER CORE
23: CABLE JACKET (SHEATH)
24: TENSION MEMBER
25: WATER BLOCKING MATERIAL
26: LOOSE TUBE
30: OPTICAL FIBER CABLE

PREFERRED EMBODIMENTS FOR CARRYING OUT THE INVENTION

Hereinafter, preferred embodiments of the present invention will be described. Each embodiment illustrated in the accompanying drawings is an example of a representative embodiment of the present invention and is not intended to limit the scope of the present invention.

A binder fiber for an optical fiber unit according to the present invention includes: a flat sea-island (type) color composite fiber that includes a sea component and an island component. Also, the flat sea-island color composite fiber is obtained by binding a plurality of core-sheath (type) color composite spun fibers, which are formed of a thermoplastic resin, into a bundle. Additionally, the thermoplastic resin includes a sheath-component resin and a core-component resin having a melting point which is higher than a melting point of the sheath-component resin by 20°C or more. Also, the sea component is obtained by fusing and integrating the sheath-component resin of the bundle while drawing the bundle at a temperature which is the melting point of the sheath-component resin or higher and lower than the melting point of the core-component resin. Furthermore, the island component is obtained by dispersing fibers formed of the core-component resin in the sea component in an island shape. In addition, the flat sea-island color composite fiber satisfies (1) to (3) described below.

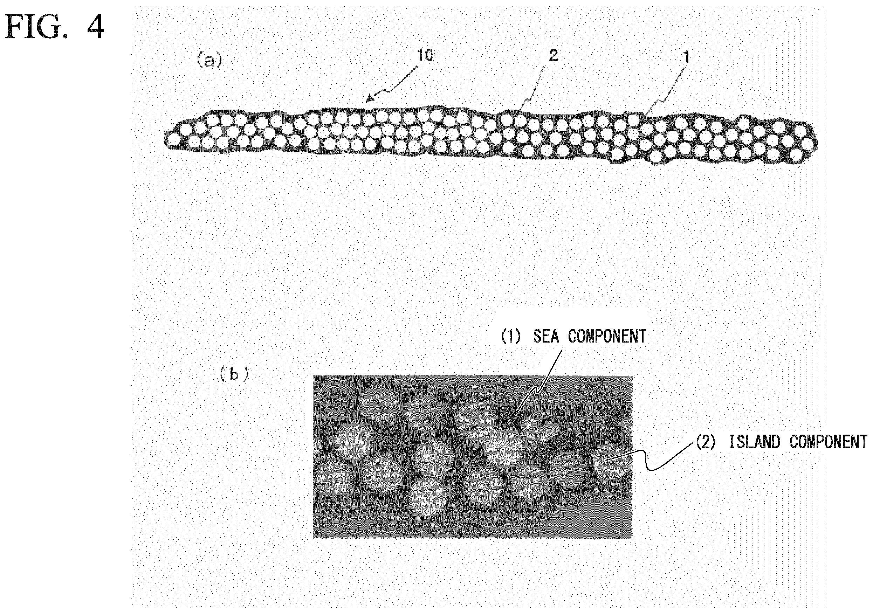

The binder fiber for an optical fiber unit according to the present invention is a flat sea-island color composite fiber, an example of a cross-sectional shape of flat sea-island color composite fiber is shown in FIG. 4(a), and the binder fiber has a shape in which a plurality of resins formed of a core-component resin are dispersed in an island shape in a sea component 1 which is obtained by fusing and integrating sheath-component resin of a plurality of core-sheath composite fibers. In order to form the flat sea-island color composite fiber, a core-sheath color composite spun fiber which is a precursor thereof is melt-spun from a core-sheath composite spinning nozzle, the core-sheath color composite spun fiber including: a sheath-component resin; and a core-component resin having a melting point which is higher than the melting point of the sheath-component resin by 20°C or more. Next, the plurality of melt-spun and undrawn fibers are bound into a bundle, and this bundle is drawn at a temperature which is equal to or higher than the melting point of the sheath-component resin and lower than the melting point of the core-component resin. As a result, in the process of drawing, the sheath-component resin of the plurality of fibers are fused and form a sea component, and the core-component resin which is not melted are dispersed in an island shape as an island component 2. The number of bundles of the core-sheath composite fibers which are formed during the drawing are determined based on the fineness, strength, and the like required for the binder fiber and the fineness and the like of the undrawn fiber during the melt-spinning.

It is preferable that the core-sheath color composite spun fiber is colored with at least a pigment which is added to the sheath-component resin because the sea component as the binder fiber is colored and is easily distinguishable.

It is preferable that the sea component of the flat sea-island color composite fiber which forms the binder fiber according to the present invention is colored with the pigment added to the sheath-component resin.

The sheath-component resin can be colored by kneading various color pigments into the sheath-component resin. In order to color the sheath-component resin, during the melt-spinning, the core-sheath composite fiber may be melt-spun while mixing a pigment master batch (hereinafter, also referred to as "MB") with a base resin of the sheath-component resin, or the core-sheath composite fiber may be melt-spun while supplying a color pellet, which is colored with a desired color, thereto.

In addition, when the core-component resin is colored as a core-sheath color composite fiber, the core-component resin can be colored by kneading various color pigments into the core-component resin instead of the above-described sheath-component resin.

The core-sheath color composite spun fiber used in the present invention includes a sheath-component resin and a core-component resin having a melting point which is higher than a melting point of the sheath-component resin by 20°C or more, and can be spun using a conventional method by a melt-spinning device including a core-sheath composite spinning nozzle.

A sheath/core cross-sectional area ratio is preferably within a range of 7/3 to 3/7 from the viewpoint of an area ratio of the sea component to the island component having a function of reinforced fiber in the flat sea-island color composite fiber which is formed during the drawing.

In the binder fiber for an optical fiber unit according to the present invention, the following is required: (1) the sea component of the flat sea-island color composite fiber has a melting start temperature of 100°C or higher and a melting peak temperature of 120°C to 150°C. Here, it should be noted that not the melting start temperature of the sheath-component resin but the melting start temperature of the sea component in the flat sea-island color composite fiber is limited. That is, the sea component is obtained by melting and integrating the sheath-component resin which are melted during the drawing, has low orientation degree in a fiber axial direction, and has a structure in which the melting start temperature is low. Therefore, after being used as the binder fiber of an optical fiber unit, the sea component can exhibit a performance of a low thermal shrinkage rate with respect to thermal history which is applied during a cable coating process.

Due to coating heat generated during integration into a cable, the flat sea-island color composite fiber which is the binder fiber having such thermal properties and low thermal shrinkage rate is molded (formed) such that the binder fiber wound in a spiral shape is fitted into an external shape (bundle) of the optical fiber unit. In particular, due to the sea component which is a low-melting-point component, superior shape retaining properties can be exhibited.

Accordingly, even when the jacket is peeled off and the binder fiber is partially cut during the branching process or the connecting process of the optical fiber cores, the optical fiber cores are not scattered, and the optical fiber units can be distinguished by color even in a dark place. That is, the jacket of the optical cable is coated using a flame-retardant polyethylene (PE) or the like at a die temperature of, typically, 200°C. Therefore, due to the amount of heat of a coating resin which is generated during passage through a coating die and is generated until it is cooled and solidified, the surface temperature of the optical fiber unit reaches about 100°C at a maximum temperature. At this temperature, the binder fiber is thermally set and is fitted into the shape of the optical fiber unit.

Regarding this fitting phenomenon, the sea-component resin (matrix resin) of the binder fiber is softened due to the heat treatment which is performed after the spiral winding or the heat treatment which is performed along with the coating of the jacket resin. As a result, the binding between multifilaments which are the island components is loosened, the island component fibers which function as reinforced fibers do not change, and only strain generated between the island component fibers is released. Accordingly, the binder fiber is fitted into the external shape of the unit in the wound state, and then is fixed in the shape by cooling. Therefore, the shape retaining properties are obtained.

In the present invention, as the melting start temperature of the sea component, the endothermic start temperature of the low-melting-point component is obtained from a DSC chart which is measured using a differential scanning calorimeter (hereinafter, referred to as "DSC") in a temperature range from room temperature to 200°C at a temperature increase condition of 10°C/min. In addition, the temperature at which the endothermic peak is maximized is set as the melting peak temperature.

In the binder fiber according to the present invention, (2) the flat sea-island color composite fiber constituting the binder fiber has a width of preferably 0.5 mm to 3.0 mm and more preferably 1.5 mm to 2.5 mm. When the width is 0.5 mm or more, the optical fiber units can be distinguished from each other during the branching and connecting process or the like. When the width is 3.0 mm or less, when the optical fiber cores are bound into a cable, the spiral winding can be smoothly performed, and little production trouble and the like occur.

When the thickness is 0.15 mm or less, the diameter of the optical cable can be reduced, and the cost can be reduced due to a decrease in the amount of the material.

It is required that (3) the flat sea-island color composite fiber constituting the binder fiber according to the present invention has a thermal shrinkage rate of 1.0% or lower after being heated at 100°C for 3 hours. When this thermal shrinkage rate is 1.0% or lower, the binder fiber has few adverse effects, such as an increase in optical transmission loss, on the optical fiber cores or the ribbons when being integrated into an optical cable or when being used after the integration. Such a thermal shrinkage rate can be achieved by selecting the raw materials of the sheath-component resin and the core-component resin and sufficiently performing the heat treatment on the flat sea-island color composite fiber which is obtained after the drawing.

The thermal shrinkage rate is measured using a method described in Examples.

In the binder fiber according to the present invention, it is necessary that the sea-component resin as the fiber be softened by the coating heat of the jacket resin during cable processing. However, when the binder fiber is melted, the molten sea-component resin of the binder fiber is bonded (thermally fused) to the fiber and the optical fiber between the units or in the unit. In the case of a cable in which the number of units is large, the color of binding yarn of a unit at the center cannot be easily recognized, and thus it is necessary that the bonded units be separated to recognize the color. Due to this separation, it is difficult to distinguish the sea-component resins of the binder fibers from each other. In addition, the workability of the branching process significantly deteriorates. Therefore, the sea-component resin (sheath-component resin) is required to have a melting start temperature of 100°C or higher as specified in (1) described above and is preferably a resin which is not easily fluidized by heat.

As the resin which is not easily fluidized after being softened, a copolymer resin containing polypropylene (PP) as a major skeleton is preferably used.

Such a resin has a wide temperature range from a melting start temperature to a melting end temperature through a melting peak temperature and is a resin having so-called broad melting characteristics.

As the sheath-component resin (sea-component resin), a single compound or a mixture of two or more compounds can be preferably used which are selected from polyethylene, two-component copolymers of ethylene or butene and propylene, and three-component polymers of ethylene, butene, and propylene which are obtained by polymerization using a Ziegler-Natta catalyst.

These resins are preferably used from the viewpoints of being distinguishable in a dark place (about light intensity (20 lux) emitted from flame of a candle) and developing a color tone unique to a color pigment. In addition, these resins are low, crystalline resins are preferably used as the thermoplastic resin of the sheath-component resin.

Furthermore, a case is assumed where the colored sheath-component resin is drawn under a general condition, that is, under a temperature condition of lower than the melting point of the sheath-component resin at which the sheath-component resin can exhibit the fiber strength. In this case, even when a low-crystalline resin is used, low molecular orientation occurs in the process of hot drawing, oriented crystallization corresponding thereto occurs, and devitrification (opacification) occurs. As a result, it is difficult to obtain a color tone unique to a color pigment. However, in the present invention, the sheath-component resin is drawn during hot drawing under a temperature condition where the sheath-component resin is melted. Therefore, a color tone unique to a color pigment can be obtained. Alternatively, in a separate process which is performed after the hot drawing process, only the sheath-component resin is melted under high tension. As a result, even when the sheath-component resin is fused and integrated, a color tone unique to a pigment can be obtained.

The core-component resin is not particularly limited as long as it has a melting point, which is higher than a melting point of the sheath-component resin by 20°C or higher, and melt-spinning can be performed. For example, crystalline polypropylene, polyethylene terephthalate, crystalline polyester such as polybutylene terephthalate, polyamide (nylon), or aromatic polyester resin (liquid crystal polymer) may be used. Among these, one kind may be used alone, or a combination of two or more kinds may be used.

Among these, one selected from crystalline polypropylene, polyethylene terephthalate, and polyamide is preferably used from the viewpoint of, for example, spinning properties using a combination with the above-described preferable sheath-component resin.

Furthermore, in the binder fiber for an optical fiber unit according to the present invention, as the sheath-component resin of the core-sheath color composite spun fiber which is the precursor of the flat sea-island color composite fiber constituting the binder fiber, an ethylene-propylene random copolymer (hereinafter, "ethylene copolymer PP") which is obtained by polymerization using a metallocene catalyst can be used. The ethylene copolymer PP obtained by polymerization using a metallocene catalyst is a thermoplastic resin which is particularly preferable in the present invention from the viewpoint of a melting point range. In addition, since the ethylene copolymer PP has high transparency as the resin alone, the color developing properties of a pigment component to be added are not likely to decrease. Therefore, the ethylene copolymer PP can be preferably used from the viewpoint of high color developing properties. That is, due to the properties of a metallocene catalyst, the ethylene copolymer PP obtained by polymerization using a metallocene catalyst tends to have a narrower (smaller) molecular weight distribution than that of a polymer obtained by polymerization using a Ziegler-Natta catalyst. In addition, as a resin, the ethylene copolymer PP has so-called sharp melting characteristics in which the melting temperature range is narrow from the melting start temperature to the melting end temperature. Therefore, during typical fiber hot drawing, the ethylene copolymer PP has properties in which oriented crystallization is likely to occur, and the melting point increases. However, in the present invention, using the sheath-component resin, the ethylene copolymer PP is drawn at a temperature of the melting point or higher and is fused and integrated after temporarily melting the fiber state. Therefore, the molecular orientation caused by the drawing is released, the melting start temperature and the melting peak temperature of the sea component measured by DSC, which are recognized as the characteristics of the binder fiber, decrease to specific temperature ranges, and the sharp melting characteristics are changed to broad melting characteristics. Accordingly, this resin can be used as a particularly preferable resin.

In addition, according to the present invention, a binder fiber for an optical fiber unit can be obtained, in which convex and concave portions are formed on a single surface or both surfaces of the flat sea-island color composite fiber.

That is, it is more preferable that the surface of the binder fiber is subjected to emboss processing because the flexibility further increases and the spiral winding can be more smoothly performed. In the emboss processing, it is preferable that convex and concave portions are formed on a single surface or both surfaces of the binder fiber in a line shape in parallel or in a lattice shape, and the shape of the convex and concave portions is not particularly limited. However, it is necessary that the distance between adjacent convex and concave portions be 5 mm or less. When this distance is more than 5 mm, the effect of obtaining flexibility is not obtained. The distance is preferably 2 mm or less and more preferably 1 mm or less.

The formation of convex and concave portions can be achieved by inserting the softened binder fiber into a gap between a pair of embossing rollers having a surface capable of embossing in a predetermined shape such that at least one surface or both surfaces of the flat sea-island color composite fiber are subjected to embossing processing. In addition, when the binder fiber has a lower temperature than in the softened state, and when this binder fiber is subjected to emboss processing using the heated embossing rollers, predetermined performance can be exhibited without damage to the surface of the flat sea-island color composite fiber.

As described above in detail, the binder fiber for an optical fiber unit according to the present invention is formed of the flat sea-island color composite fiber, in which at least the sea component is preferably colored. In addition, the thermal properties including the melting characteristics of the sea component are within the specific ranges, and the width, the thickness, and the thermal shrinkage rate are within the specific ranges. As a result, functions can be exhibited which are superior in, for example, color developing properties which can make optical fiber units distinguishable even in a dark place, shape retaining properties as an optical fiber unit, low transmission loss, and non-adhesion between the binder fibers or with the optical fiber cores.

In order to maintain a strength required during a process as a fiber or during integration into a cable, the binder fiber for an optical fiber unit according to the present invention is formed of the flat sea-island color composite fiber, in which a high-melting-point resin is used as the island component, and a low-melting-point resin is used as the sea component. A pigment is added to at least a low-melting-point component which is the sheath-component resin of the core-sheath color composite spun fiber. During a hot-drawing process, when a plurality of core-sheath color composite spun fibers are bound into a bundle, and when this bundle is hot-drawn at a temperature which is equal to or higher than the melting point of the low-melting-point component and lower than the melting point of the high-melting-point component, the low-melting-point components are fused and integrated into a structure in which the low-melting-point components form a sea-like matrix, and the high-melting-point components are dispersed in this matrix as island-like fiber groups. As a result, the flat sea-island color composite fiber according to the present invention having far superior performance as the binder fiber can be manufactured. This manufacturing method is reasonable and preferable from the viewpoint of cost.

Furthermore, temporarily melting the low-melting-point components reduces the molecular orientation. Therefore, a problem of the related art sin which, for example, a decrease in color developing properties caused by a decrease in transparency (for example, devitrification) due to the molecular orientation during drawing can be solved. In addition, not only an advantageous effect of improving the color developing properties of the pigment but also a significant effect of decreasing the thermal shrinkage rate of a fiber to improve thermal resistance can be exhibited.

In addition, by further performing an annealing treatment, the thermal shrinkage rate of the fiber can be made to be 1.0% or lower after being heated at 100°C for 3 hours. When a thermal coating process is performed using a jacket resin during integration into a cable, the binder fiber is not thermally shrunk by heat generated during the thermal coating and does not compress the optical fiber cores. Therefore, the transmission loss of the optical fiber does not occur.

Furthermore, in the binder fiber for an optical fiber unit according to the present invention, due to the heat generated by the thermal coating process in which a jacket resin is coated while being heated during integration into a cable, the low-melting-point component resin is fitted into the external shape of the optical fiber unit. Then, superior shape retaining properties can be obtained in a step of obtaining a cable after cooling. Accordingly, even when the jacket is peeled off and the binder fiber is partially cut during the branching process or the connecting process of the optical fiber, the optical fiber cores are not scattered, and the optical fiber units can be accurately distinguished by color even in a dark place.

[Examples]

Hereinafter, the present invention will be described in more detail using Examples. However, the present invention is not limited to these examples.
In addition, the binder fiber was evaluated using the following methods.

(1) Method of Evaluating Melting Start Temperature of Sea Component

As the melting start temperature of the sea component, the endothermic start temperature of the low-melting-point component was obtained from DSC data of 7.0 mg of a fiber sample which was measured using a differential scanning calorimeter (hereinafter, referred to as "DSC") in a temperature range from room temperature to 200°C under a temperature increase condition of 10°C/min. In addition, the temperature at which the endothermic peak reached the maximum was set as the melting peak temperature (melting point). Regarding the island component, the temperature at which the endothermic peak reached the maximum was set as the melting point.

(2) Method of Evaluating Thermal Shrinkage Rate

A fiber cut into a length of 1000 mm was cured for 3 hours in an oven heated to 100°C and then was extracted from the oven to measure the length of the fiber. Next, the thermal shrinkage rate was calculated from the following expression.

$$\text{Thermal Shrinkage Rate (\%)} = (1000 - \text{Fiber Length (mm) after Curing}) \times 100/1000$$

(3) Method of Measuring Size of Binder Fiber

A sample of a cross-section of a binder fiber (yarn) perpendicular to a longitudinal direction of the binder fiber was prepared using a microtome. This yarn cross-section sample was fixed to a plane and was observed from the top and the side of the yarn using a digital microscope (VHX-900; manufactured by Keyence Corporation). An observed image was input to a personal computer using a camera to which an appropriate magnifying lens was attached, and the length was measured by comparison to a reference length which was the length of an arbitrary position. In the measurement, the long diameter was set as the width, and the short diameter was set as the thickness. The width was measured at an accuracy of 1/10 mm by observing the image using a 50 $\times$ magnifying lens.
The thickness was measured at an accuracy of 1/100 mm by observing the image using a 175 $\times$ magnifying lens. The measurement of the yarn sample was performed 5 times at an interval of 1 mm, and the average value was obtained.
In each comparative example, the state of the flat sea-island color composite fiber was not shown. The width and thickness of a multifilamentary binder fiber which was not fused were not able to be accurately measured and are shown in each comparative example as "apparent width" and "apparent thickness" for discrimination.

(4) Method of Evaluating Discriminability

An optical fiber cable containing optical fiber units bound by a binder fiber was disassembled, the discrimination function of the binder fiber was verified by visual inspection under a lamp light of 20 lux. The visual inspection was performed by 5 people. A case where 5 people were able to distinguish the optical fiber units was estimated as "O", a case where 3 people or 4 people were able to distinguish the optical fiber units was estimated as "Δ", and a case where 2 people or less was able to distinguish the optical fiber units was estimated as "X". Among these, only the results of "O" were evaluated as "Pass".

(5) Method of Evaluating Non-Adhesion

As described above in (4), the optical fiber cable was disassembled, and whether or not the binder fiber (yarn) was bonded to the optical fiber cores and whether or not the binder fibers (yams) were bonded to each other were determined by visual inspection and touch. A case where there was no adhesion was evaluated as "O", and a case where there was an adhesion was evaluated as "X". Only the results of "O" were evaluated as "Pass".

(6) Method of Evaluating Shape Retaining Properties of Optical Fiber Unit

As described above in (4), the optical fiber cable was disassembled, and then the optical fiber unit was cut at an intermediate position. A case where the optical fiber cores at a terminal were scattered was evaluated as "O", and a case where the workability significantly deteriorated was evaluated as "X". Only the results evaluated "O" were determined to "Pass".

(7) Method of Evaluating Transmission Loss

After integration into a cable, an optical fiber core was arbitrarily selected and was measured with the OTDR method using a measuring device (Model No: AQ7250; manufactured by Ando Electric Co., Ltd.) at a measurement wavelength of 1.55 $\mu$m. A case where the transmission loss was 0.25 dB/km or less was determined to be superior.

Example 1

Preparation of Core-sheath Color Composite Spun Fiber

As the PP resin of the core-component resin, isotactic polypropylene (manufactured by Prime Polymer Co., Ltd., grade name: S135) having a melting point of 169°C was used. In addition, as the sheath-component resin, an ethylene-propylene random copolymer (hereinafter, also referred to as "ethylene copolymer PP" or "co-PP resin"; manufactured by Japan Polypropylene Corporation, grade name: WINTEC WSX02) having a melting point of 125°C which was obtained by polymerization using a metallocene catalyst was used. Furthermore, 5% of blue 15% MB for coloring (manufactured by Tokyo Printing Ink MFG Co., Ltd., grade name: TPM 5BA649 BLUE MF #131) was added. A fiber was spun using a conventional method by a melt-spinning device including a core-sheath composite spinning nozzle (120 H) at a sheath/core cross-sectional ratio of 4/6 at 240°C and was continuously cooled by evacuation and air cooling. As a result, an undrawn yarn of core-sheath color composite fiber having a fineness of 14331 dtex was obtained.

Next, 120 filaments of the spun undrawn yarn were bound to a bundle, and this bundle was drawn to a draw ratio of 11 times in one stage under a steam pressure of 0.52 MPa (absolute pressure) and a saturation vapor pressure at 154°C. Along with the drawing, the core-component fibers were fused and integrated with the co-PP fiber of the sheath-component resin. As a result, a flat fiber of 120 core-component filaments having a total fineness of 1312 dtex was obtained. Next, by pressing this flat fiber with rollers at 150°C (gauge pressure: 0.35 Mpa), the width and the thickness were adjusted to 2.0 mm and 0.11 mm, respectively. As a result, the flat sea-island color composite fiber which was obtained by fusion and integration with the co-PP fiber of the sheath-component resin. Furthermore, this flat sea-island color composite fiber having a length of 35 km was wound around a paper tube having a length of 12 inch under a tension of 0.49 N.

Using a vacuum heating device, this fiber was annealed at a vacuum degree (absolute pressure) of 0.05 MPa and a temperature of 125°C for 30 minutes.

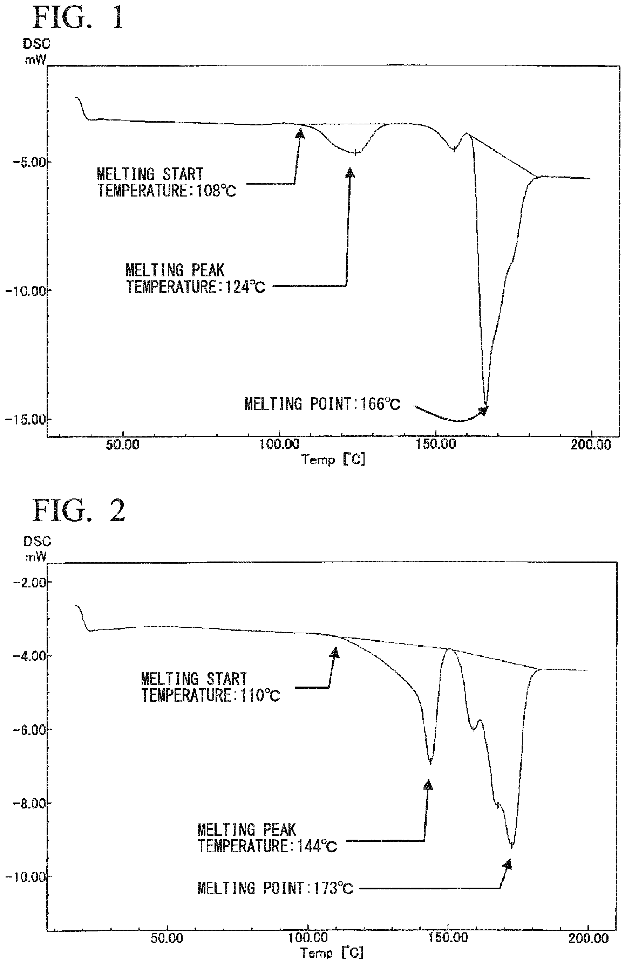

In the obtained flat sea-island color fiber (hereinafter, also simply referred to as "yarn"), as shown in a DSC chart of FIG. 1, the melting start temperature of the sea component was 108°C, the melting peak temperature of the sea component was 124°C, and the melting point of the island component was 166°C. In addition, it was confirmed that, in the flat sea-island color composite fiber, the color sheath-component resin was integrated into the sea component as shown in FIG. 4. The thermal shrinkage rate after curing at 100°C for 3 hours was 0.51%.

The raw material composition, the preparation conditions, and the evaluation results of the obtained binder fiber (yarn) are collectively shown in Table 1.

Preparation of Optical Fiber Cable

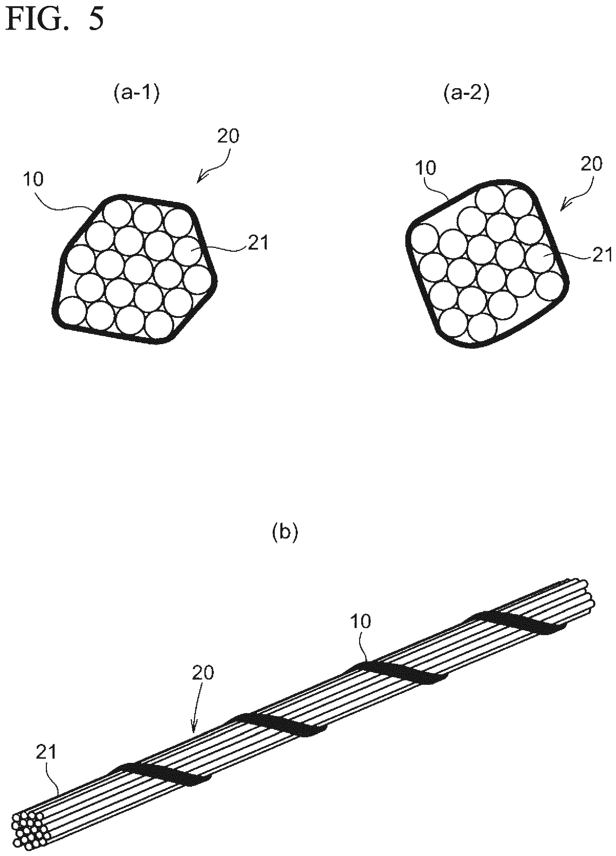

20 mono filamentary optical fiber cores were aligned and wound clockwise to be bound by the above-described single yarn (binder fiber) at a winding pitch of approximately 100 mm. After the binding, a cross-section of an optical fiber unit 20 had an indefinite shape because 20 optical fiber cores 21 were bound as in (a-1) and (a-2) of FIG. 5 in which an example of the binding state was schematically shown.

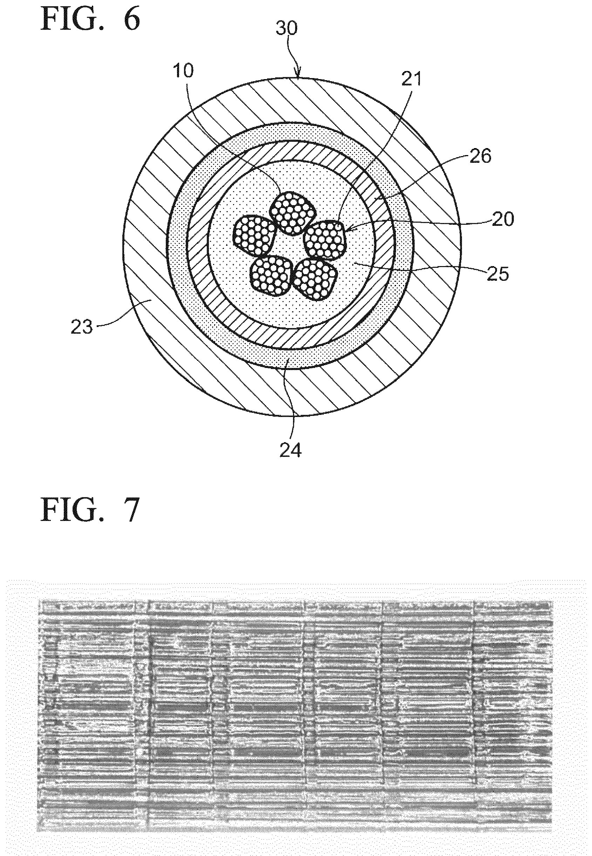

Next, 5 optical fiber units obtained as above were bound and coated with an ethylene-ethyl acrylate copolymer (manufactured by Nippon Unicar Co., Ltd., grade name: NUC 9739) having a melting point range of 70°C to 110°C which was a coating material obtained by extrusion at 190°C. As a result, a 100-filamentary optical fiber cable having a cross-sectional structure shown in FIG. 6 was prepared.

When being used as the binder fiber of the optical fiber unit, the evaluation results of this optical fiber cable are shown in Table 1.

As shown in Table 1, the discriminability between the optical fiber units was superior; regarding the shape retaining properties after integration into a cable, the optical fiber cores were not scattered; and the workability was superior. In addition, the transmission loss of the cable characteristics was at a low level of 0.19 dB/km. Accordingly, the binder fiber did not compress the optical fiber. In addition, the adhesion between the binder fibers or between the binder fiber and the optical fiber cores due to heat generated during integration into a cable was not observed.

Example 2

A binder fiber was prepared with the same method as that of Example 1, except that PET (manufactured by Nippon Unicar Co., Ltd., grade name: SA-1206) having a melting point of 256°C was used as the core-component resin; a non-drawn yarn of core-sheath composite fiber having a fineness of 8412 dtex obtained by spinning at 300°C was drawn to 6 times by dry hot drawing at 200°C; and a flat sea-island color composite fiber having a fineness of 1405 dtex, a width of 2.1 mm, and a thickness of 0.10 mm was obtained by fusion and integration. Using the prepared binder fiber, the evaluation was performed. In the obtained binder fiber, the melting start temperature of the sea component was 111 °C, the melting peak temperature of the sea component was 127°C, and the thermal shrinkage rate after curing at 100°C for 3 hours was 0.38%.

Using the obtained binder fiber, a cable was prepared with the above-described method, and various evaluations were performed with the above-described evaluation methods. Preparation methods and various evaluation results are collectively shown in Table 1.

As shown in Table 1, the discriminability between the optical fiber units was superior; regarding the shape retaining properties after integration into a cable, the optical fiber cores were not scattered; and the workability was superior. In addition, the transmission loss of the cable characteristics was at a low level of 0.20 dB/km. Accordingly, the binder fiber did not compress the optical fiber. In addition, the adhesion between the binder fibers or between the binder fiber and the optical fiber cores due to heat generated during integration into a cable was not observed.

Example 3

A binder fiber was prepared with the same method as that of Example 1, except that Nylon 6 (Ny6; manufactured by Ube Industries Ltd., grade name: 1030B2) having a melting point of 225°C was used as the core-component resin; a non-drawn yarn of core-sheath composite fiber having a fineness of 8104 dtex obtained by spinning at 265°C was drawn to 6 times by dry hot drawing at 200°C; and a flat sea-island composite fiber having a fineness of 1351 dtex, a width of 2.0 mm, and a thickness of 0.11 mm was obtained by fusion and integration. Using the prepared binder fiber, the evaluation was performed. In the obtained binder fiber, the melting start temperature of the sea component was 109°C, the melting peak temperature of the sea component was 125°C, and the thermal shrinkage rate after curing at 100°C for 3 hours was 0.43%.

Using the obtained binder fiber, a cable was prepared with the same method as that of Example 1, and various evaluations were performed. Preparation methods and various evaluation results are collectively shown in Table 1.

As shown in Table 1, the discriminability between the optical fiber units was superior; regarding the shape retaining properties after integration into a cable, the optical fibers were not scattered; and the workability was superior. In addition, the transmission loss of the cable characteristics was at a low level of 0.19 dB/km. Accordingly, the binder fiber did not compress the optical fiber. In addition, adhesion between the binder fibers or between the binder fiber and the optical fiber cores due to heat generated during integration into a cable was not observed.

Example 4

A binder fiber was prepared with the same method as that of Example 1, except that the same MB for coloring as that of Example 1 was added to the PP resin of the core-component resin; and a flat sea-island color composite fiber having a fineness of 1295 dtex, a width of 2.2 mm, and a thickness of 0.09 mm was obtained by fusion and integration. Using the prepared binder fiber, the evaluation was performed. In the obtained binder fiber, the melting start temperature of the sea component was 112°C, the melting peak temperature of the sea component was 127°C, and the thermal shrinkage rate after curing at 100°C for 3 hours was 0.56%.

Using the obtained binder fiber, a cable was prepared with the same method as that of Example 1, and various evaluations were performed. Preparation methods and various evaluation results are collectively shown in Table 1.

As shown in Table 1, the discriminability between the optical fiber units was superior; regarding the shape retaining properties after integration into a cable, the optical fibers were not scattered; and the workability was superior. In addition, the transmission loss of the cable characteristics was at a low level of 0.20 dB/km. Accordingly, the binder fiber did not compress the optical fiber. In addition, the adhesion between the binder fibers or between the binder fiber and the optical fiber cores due to heat generated during integration into a cable was not observed.

Example 5

A binder fiber was prepared with the same method as that of Example 1, except that a copolymer polypropylene (manufactured by SunAllomer Ltd., grade name: PH943B) having a melting point of 144°C which was a co-PP resin obtained by polymerization using a Ziegler-Natta catalyst was used as the sheath-component resin; and a flat sea-island color composite fiber having a fineness of 1314 dtex, a width of 2.3 mm, and a thickness of 0.12 mm was obtained by fusion and integration. Using the prepared binder fiber, the evaluation was performed. In the obtained binder fiber, the melting start temperature of the sea component was 120°C, the melting peak temperature of the sea component was 141°C, and the thermal shrinkage rate after curing at 100°C for 3 hours was 0.64%.

Using the obtained binder fiber, a cable was prepared with the same method as that of Example 1, and various evaluations were performed. Preparation methods and various evaluation results are collectively shown in Table 1.

As shown in Table 1, the discriminability between the optical fiber units was superior; regarding the shape retaining properties after integration into a cable, the optical fibers were not scattered; and the workability was superior. In addition, the transmission loss of the cable characteristics was at a low level of 0.21 dB/km. Accordingly, the binder fiber did not compress the optical fiber. In addition, the adhesion between the binder fibers or between the binder fiber and the optical fiber cores due to heat generated during integration into a cable was not observed.

Example 6

A binder fiber was prepared with the same method as that of Example 1, except that 5% of green 15% MB for coloring (manufactured by Tokyo Printing Ink MFG Co., Ltd., grade name: TPM 6BA422 GREEN MF #131) was added to the sheath-component resin; a non-drawn yarn of core-sheath composite fiber having a fineness of 5511 dtex was drawn to 11 times; and a flat sea-island color composite fiber having a fineness of 521 dtex, a width of 0.7 mm, and a thickness of 0.08 mm was obtained by fusion and integration. Using the prepared binder fiber, the evaluation was performed. In the obtained binder fiber, the melting start temperature of the sea component was 110°C, the melting peak temperature of the sea component was 125°C, and the thermal shrinkage rate after curing at 100°C for 3 hours was 0.48%.

Using the obtained binder fiber, a cable was prepared, and various evaluations were performed. Preparation methods and various evaluation results are collectively shown in Table 1.

As shown in Table 1, the discriminability between the optical fiber units was superior; regarding the shape retaining properties after integration into a cable, the optical fibers were not scattered; and the workability was superior. In addition, the transmission loss of the cable characteristics was at a low level of 0.21 dB/km. Accordingly, the binder fiber did not compress the optical fiber. In addition, the adhesion between the binder fibers or between the binder fiber and the optical fiber cores due to heat generated during integration into a cable was not observed.

Example 7

A binder fiber was prepared with the same method as that of Example 1, except that 5% of red 15% MB for coloring (manufactured by Tokyo Printing Ink MFG Co., Ltd., grade name: TPM 4BA985 RED MF #131) was added to the sheath-component resin; a non-drawn yarn of core-sheath composite fiber having a fineness of 22035 dtex was drawn to 11 times; and a flat sea-island color composite fiber having a fineness of 2026 dtex, a width of 2.8 mm, and a thickness of 0.13 mm was obtained by fusion and integration. Using the prepared binder fiber, the evaluation was performed. In the obtained binder fiber, the melting start temperature of the sea component was 111 °C, the melting peak temperature of the sea component was 124°C, and the thermal shrinkage rate after curing at 100°C for 3 hours was 0.61%.

Using the obtained yarn, a cable was prepared with the same method as that of Example 1, and various evaluations were performed. Preparation methods and various evaluation results are collectively shown in Table 1.

As shown in Table 1, the discriminability between the optical fiber units was superior; regarding the shape retaining properties after integration into a cable, the optical fiber cores were not scattered; and the workability was superior. In addition, the transmission loss of the cable characteristics was at a low level of 0.19 dB/km. Accordingly, the binder fiber did not compress the optical fiber. In addition, the adhesion between the binder fibers or between the binder fiber and the optical fiber cores due to heat generated during integration into a cable was not observed.

Example 8

A binder fiber was prepared with the same method as that of Example 1, except that, using a vacuum heating device, this fiber was annealed at a temperature of 125°C for 15 hours; and a flat sea-island color composite fiber having a fineness of 1325 dtex, a width of 2.2 mm, and a thickness of 0.12 mm was obtained by fusion and integration. Using the prepared binder fiber, the evaluation was performed. In the obtained binder fiber, the melting start temperature of the sea component was 108°C, the melting peak temperature of the sea component was 126°C, and the thermal shrinkage rate after curing at 100°C for 3 hours was 0.80%.

Using the obtained binder fiber, a cable was prepared with the same method as that of Example 1, and various evaluations were performed. Preparation methods and various evaluation results are collectively shown in Table 1.

As shown in Table 1, the discriminability between the optical fiber units was superior; regarding the shape retaining properties after integration into a cable, the optical fiber cores were not scattered; and the workability was superior. In addition, the transmission loss of the cable characteristics was at a low level of 0.23 dB/km. Accordingly, the binder fiber did not compress the optical fiber. In addition, the adhesion between the binder fibers or between the binder fiber and the optical fiber cores due to heat generated during integration into a cable was not observed.

Example 9

A binder fiber was prepared with the same method as that of Example 1, except that a copolymer polypropylene (manufactured by Prime Polymer Co., Ltd., grade name: Y2045GP) having a melting point of 131 °C which was a co-PP resin obtained by polymerization using a Ziegler-Natta catalyst was used as the sheath-component resin; and a flat sea-island color composite fiber having a fineness of 1307 dtex, a width of 2.3 mm, and a thickness of 0.10 mm was obtained by fusion and integration. Using the prepared binder fiber, the evaluation was performed. In the obtained binder fiber, the melting start temperature of the sea component was 110°C, the melting peak temperature of the sea component was 124°C, and the thermal shrinkage rate after curing at 100°C for 3 hours was 0.64%.

Using the obtained binder fiber, a cable was prepared with the same method as that of Example 1, and various evaluations were performed. Preparation methods and various evaluation results are collectively shown in Table 1.

As shown in Table 1, the discriminability between the optical fiber units was superior; regarding the shape retaining properties after integration into a cable, the optical fiber cores were not scattered; and the workability was superior. In addition, the transmission loss of the cable characteristics was at a low level of 0.22 dB/km. Accordingly, the binder fiber did not compress the optical fiber. In addition, the adhesion between the binder fibers or between the binder fiber and the optical fiber cores due to heat generated during integration into a cable was not observed.

Example 10

A binder fiber was prepared with the same method as that of Example 1, except that PET (manufactured by Nippon Unicar Co., Ltd., grade name: SA-1206) having a melting point of 256°C was used as the core-component resin; a flat sea-island color composite fiber having a fineness of 1373 dtex, a width of 2.1 mm, and a thickness of 0.11 mm was obtained by fusion and integration; and a pair of upper and lower surfaces of the binder fiber was subjected to emboss processing while inserting the binder fiber into an embossing device including gear-shaped embossing (molding) rollers and pressing (gauge pressure: 0.30 Mpa) the binder fiber. Using the prepared binder fiber, the evaluation was performed. In the obtained binder fiber, concave cavities were formed on both the surfaces at an interval length of 0.6 mm to 0.7 mm, the melting start temperature of the sea component was 112°C, the melting peak temperature of the sea component was 126°C, and the thermal shrinkage rate after curing at 100°C for 3 hours was 0.40%. A surface image of the obtained binder fiber is shown in FIG. 7. In addition, the bending resistance measured with a method described below was 112 mm.

Using the obtained binder fiber, a cable was prepared with the above-described method, and various evaluations were performed with the above-described evaluation methods. Preparation methods and various evaluation results are collectively shown in Table 1.

As shown in Table 1, the discriminability between the optical fiber units was superior; regarding the shape retaining properties after integration into a cable, the optical fiber cores were not scattered; and the workability was superior. In addition, the transmission loss of the cable characteristics was at a low level of 0.18 dB/km. Accordingly, the binder fiber did not compress the optical fiber. In addition, the adhesion between the binder fibers or between the binder fiber and the optical fiber cores due to heat generated during integration into a cable was not observed.

Method of Measuring Bending Resistance

The measurement was performed according to A method (45° cantilever method) described in 8.21.1 of JIS-L-1096 (2010). As the binder fiber for the measurement, one in which a bending portion, which may be formed by curling when being wound around a bobbin, was not present or was removed was used. One binder fiber was moved in the lengthwise direction, and when a tip end of the binder fiber came into contact with a surface inclined to an angle of 45° due to its own weight, the length was measured. Regarding five binder fibers, the measurement was performed at ten points in total after facing front and back surfaces upward, respectively, and the average value of the measured values was set as a bending resistance (mm).

[Table 1] (1/4)

| Item | | | Example 1 | Example 2 | Example 3 | Example 4 | Example 5 |
|---|---|---|---|---|---|---|---|
| Composition of Core-Sheath Composite Fiber | Sheath-component | Kind | co-PP | co-PP | co-PP | co-PP | co-PP |
| | | Manufacturer Name | Japan Polypropylene Corporation | Japan Polypropylene Corporation | Japan Polypropylene Corporation | Japan Polypropylene Corporation | SunAllomer Ltd. |
| | | Grade | WINTEC WSX02 | WINTEC WSX02 | WINTEC WSX02 | WINTEC WSX02 | PH943B |
| | | Melting Point (°C) | 125 | 125 | 125 | 125 | 144 |
| | | MB Color | Blue | Blue | Blue | Blue | Blue |
| | | Amount (%) of MB Added | 5 | 5 | 5 | 5 | 5 |
| | Core Component | Kind | PP | PET | Ny6 | PP | PP |
| | | Manufacturer Name | Prime Polymer Co., Ltd. | Nippon Unicar Co., Ltd. | Ube Industries Ltd. | Prime Polymer Co., Ltd. | Prime Polymer Co., Ltd. |
| | | Grade | S135 | SA1206 | 1030B2 | S135 | S135 |
| | | Melting Point (°C) | 169 | 256 | 225 | 169 | 169 |
| | | MB Color | None | None | None | Blue | None |
| | | Amount (%) of MB Added | None | None | None | 5 | None |
| | Melting Point of Core-Component Resin - Melting Point of Sheath-Component Resin (°C) | | 44 | 131 | 100 | 44 | 25 |

EP 2 884 320 B1

[Table 1] (2/4)

| Item | | | Example 6 | Example 7 | Example 8 | Example 9 | Example 10 |
|---|---|---|---|---|---|---|---|
| Composition of Core-Sheath Composite Fiber | Sheath-component | Kind | co-PP | co-PP | co-PP | co-PP | co-PP |
| | | Manufacturer Name | Japan Polypropylene Corporation | Japan Polypropylene Corporation | Japan Polypropylene Corporation | Prime Polymer Co., Ltd. | Japan Polypropylene Corporation |
| | | Grade | WINTEC WSX02 | WINTEC WSX02 | WINTEC WSX02 | Y2045GP | WINTEC WSX02 |
| | | Melting Point (°C) | 125 | 125 | 125 | 131 | 125 |
| | | MB Color | Green | Red | Blue | Blue | Blue |
| | | Amount (%) of MB Added | 5 | 5 | 5 | 5 | 5 |
| | Core Component | Kind | PP | PP | PP | PP | PET |
| | | Manufacturer Name | Prime Polymer Co., Ltd. | Prime Polymer Co., Ltd. | Prime Polymer Co., Ltd. | Prime Polymer Co., Ltd. | Nippon Unicar Co., Ltd. |
| | | Grade | S135 | S135 | S135 | S135 | SA1206 |
| | | Melting Point (°C) | 169 | 169 | 169 | 169 | 256 |
| | | MB Color | None | None | None | None | None |
| | | Amount (%) of MB Added | None | None | None | None | None |
| | Melting Point of Core-Component Resin - Melting Point of Sheath-Component Resin (°C) | | 44 | 44 | 44 | 38 | 131 |

EP 2 884 320 B1

[Table 1] (3/4)

| Item | | | | Example 1 | Example 2 | Example 3 | Example 4 | Example 5 |
|---|---|---|---|---|---|---|---|---|
| Preparation Conditions of Binder Fiber | Drawing Conditions | Vapor Drawing | Vapor Pressure (Mpa) | 0.52 | None | None | 0.52 | 0.52 |
| | | | Temperature (°C) | 154 | None | None | 154 | 154 |
| | | Dry Hot Drawing | Temperature (°C) | None | 200 | 200 | None | None |
| | Roller Press | Pressure (Mpa) | | 0.35 | 0.35 | 0.35 | 0.35 | 0.35 |
| | | Temperature (°C) | | 150 | 150 | 150 | 150 | 150 |
| | Emboss Processing | Embossing Shape | | - | - | - | - | - |
| | | Press Pressure (Mpa) | | - | - | - | - | - |
| | Annealing | Vacuum Degree: 0.05 Mpa, Temperature (°C)×Time (h) | | 125°C×30h | 125°C×30h | 125°C×30h | 125°C×30h | 125°C×30h |
| Evaluation of Binder Fiber | Basic Physical Properties | Fineness (dTex) | | 1312 | 1405 | 1351 | 1295 | 1314 |
| | | Melting Peak Temperature (°C) of Sea Component | | 124 | 127 | 125 | 127 | 141 |
| | | Melting Start Temperature (°C) of Sea Component | | 108 | 111 | 109 | 112 | 120 |
| | | Integration of Sheath Component | | ○ | ○ | ○ | ○ | ○ |
| | | Width (mn) | | 2 | 2.1 | 2 | 2.2 | 2.3 |
| | | Thickness (mm) | | 0.11 | 0.1 | 0.11 | 0.09 | 0.12 |
| | | Thermal Shrinkage Rate (%; 100°C × 3h) | | 0.51 | 0.38 | 0.43 | 0.56 | 0.64 |
| Evaluation of Cable | Discriminability | Visual Inspection | | ○ | ○ | ○ | ○ | ○ |
| | Shape retaining properties | Terminal State | | ○ | ○ | ○ | ○ | ○ |
| | Non-adhesion | whether or not there is adhesion | | ○ | ○ | ○ | ○ | ○ |
| | Transmission loss | (dB/km) Wavelength: 155 μm | | 0.19 | 0.20 | 0.19 | 0.20 | 0.21 |

[Table 1] (4/4)

| Item | | | | Example 6 | Example 7 | Example 8 | Example 9 | Example 10 |
|---|---|---|---|---|---|---|---|---|
| Preparation Conditions of Binder Fiber | Drawing Conditions | Vapor Drawing | Vapor Pressure (Mpa) | 0.52 | 0.52 | 0.52 | 0.52 | 0.52 |
| | | | Temperature (°C) | 154 | 154 | 154 | 154 | 154 |
| | | Dry Hot Drawing | Temperature (°C) | None | None | None | None | None |
| | Roller Press | Pressure (Mpa) | | 0.35 | 0.35 | 0.35 | 0.35 | 0.35 |
| | | Temperature (°C) | | 150 | 150 | 150 | 150 | 150 |
| | Emboss Processing | Embossing Shape | | - | - | - | - | Gear |
| | | Press Pressure (Mpa) | | - | - | - | - | 0.3 |
| | Annealing | Vacuum Degree: 0.05 Mpa, Temperature (°C)×Time (h) | | 125°C×30h | 125°C×30h | 125°C×15h | 125°C×30h | 125°C×30h |
| Evaluation of Binder Fiber | Basic Physical Properties | Fineness (dTex) | | 521 | 2026 | 1325 | 1307 | 1373 |
| | | Melting Peak Temperature (°C) of Sea Component | | 125 | 124 | 126 | 124 | 126 |
| | | Melting Start Temperature (°C) of Sea Component | | 110 | 111 | 108 | 110 | 112 |
| | | Integration of Sheath Component | | ○ | ○ | ○ | ○ | ○ |
| | | Width (mm) | | 0.7 | 2.8 | 2.2 | 2.3 | 2.1 |
| | | Thickness (mm) | | 0.08 | 0.13 | 0.12 | 0.1 | 0.11 |
| | | Thermal Shrinkage Rate (%; 100°C×3h) | | 0.48 | 0.61 | 0.8 | 0.64 | 0.4 |
| Evaluation of Cable | Discriminability | Visual Inspection | | ○ | ○ | ○ | ○ | ○ |
| | Shape retaining properties | Terminal State | | ○ | ○ | ○ | ○ | ○ |
| | Non-adhesion | whether or not there is adhesion | | ○ | ○ | ○ | ○ | ○ |
| | Transmission loss | (dB/km) Wavelength: 155 μm | | 0.21 | 0.19 | 0.23 | 0.22 | 0.18 |

In Table 1, evaluation symbols represent as follows.

Discriminability: 5 people performed visual inspection under a lamp light of 20 lux. "O: 5 people were able to distinguish the optical fiber units, △: 3 or 4 people were able to distinguish the optical fiber units, X: 2 people or less was able to distinguish the optical fiber units"

Shape retaining properties (terminal state): "O: not scattered, X: scattered".

Non-adhesion (whether or not there is adhesion): "O: there was no adhesion, X: there was an adhesion".

Comparative Example 1

A binder fiber was prepared with the same method as that of Example 1, except that 5% of Mb for coloring was added to only the core-component resin instead of adding MB for coloring to the sheath-component resin; and a flat sea-island color composite fiber having a fineness of 1330 dtex, a width of 2.4 mm, and a thickness of 0.12 mm was obtained by fusion and integration. Using the prepared binder fiber, the evaluation was performed. Since blue MB for coloring was added to only the core-component resin, the blue pigment was not present in the sea component. Therefore, the color developing properties were poor, and it is difficult to distinguish the optical fiber units.

Using the obtained binder fiber, a cable was prepared, and various evaluations were performed. Preparation methods and various evaluation results are collectively shown in Table 2.

As shown in Table 2, regarding the shape retaining properties after integration into a cable, the optical fiber cores were not scattered; the transmission loss of the cable characteristics was at a low level of 0.20 dB/km; the adhesion between the binder fibers or between the binder fiber and the optical fiber cores due to heat generated during integration into a cable was not observed. However, the color discriminability between the optical fiber units was poor.

Comparative Example 2

A non-fused multifilamentary yarn was prepared with the same method as that of Example 1, except that the fiber was drawn in one stage under a drawing temperature condition of a vapor pressure of 0.24 MPa (absolute pressure) and a saturation vapor pressure at 120°C; the sheath-component resin was not melted; the roller press temperature was 110°C; using a vacuum heating device, the fiber was annealed at a temperature of 110°C for 30 hours; and in a state where the drawn core-sheath composite fibers having a fineness 1308 dtex were bound, the apparent width was 1.7 mm and the apparent thickness was 0.13 mm. Using the prepared binder fiber, the evaluation was performed.

In the obtained multifilamentary yarn, as shown in a DSC chart of FIG. 2, the melting start temperature of the sheath-component resin was 110°C, the melting peak temperature (melting point) of the sheath-component resin was 144°C, and the melting point of the island component was 173°C. The sheath-component resin did not undergo the molten state during a process subsequent to the drawing. Therefore, along with the progress of the oriented crystallization of the sheath-component resin, the melting peak temperature of the sheath-component resin was increased by 20°C as compared to that in Example 1.

In the obtained yarn, the sheath-component resin was multifilamentary without being fused and integrated and were scattered. Therefore, the shape retaining properties were poor, and the optical fiber cores were scattered in the terminal after the optical fiber unit was cut. In addition, the yarn was scattered, devitrification occurred along with the progress of the oriented crystallization of the sheath-component resin, and the color discriminability was poor.

Using the obtained yarn as the binder fiber, a cable was prepared, and various evaluations were performed.

Preparation methods and various evaluation results are collectively shown in Table 2.

As shown in Table 2, the transmission loss of the cable characteristics was at a low level of 0.22 dB/km; and the adhesion between the binder fibers or between the binder fiber and the optical fiber cores due to heat generated during integration into a cable was not observed. However, the sheath-component resin was not fused and integrated, and the discriminability between the optical fiber units was poor. Furthermore, regarding the shape retaining properties after integration into a cable, the optical fiber cores were scattered. Accordingly, the workability was poor.

Comparative Example 3

A non-fused multifilamentary yarn was prepared with the same method as that of Example 1, except that a copolymer polypropylene (manufactured by Prime Polymer Co., Ltd., grade name: PM923V) having a melting point of 156°C which was a co-PP resin obtained by polymerization using a Ziegler-Natta catalyst was used as the sheath-component resin; and in a state where the drawn core-sheath composite fibers having a fineness 1327 dtex were bound, the apparent width was 1.9 mm and the apparent thickness was 0.13 mm. Using the prepared binder fiber, the evaluation was performed.

In the obtained multifilamentary yarn, the melting start temperature of the sheath-component resin was 155°C, the melting peak temperature (melting point) of the sheath-component resin was 170°C, and the melting point of the sheath-component resin was high. In addition, the drawing temperature condition was 154°C which was lower than 156°C of the melting point of the co-PP resin as the sheath-component resin. Therefore, the sheath-component resin was not fused and integrated, and filaments were scattered. Accordingly, the shape retaining properties were poor, and the optical fiber cores were scattered in the terminal after the optical fiber unit was cut. In addition to the poor shape retaining properties, the sheath-component resin did not undergo the molten state during a process subsequent to the drawing. Therefore, along with the progress of the oriented crystallization of the sheath-component resin during the drawing, an adverse effect of devitrification occurred, and the color discriminability was poor. In Comparative Example 3, the saturation vapor pressure was increased, and a high-pressure saturation vapor at approximately 176°C was required in order to drawn and fuse the sheath-component resin. Therefore, with the isotatic polypropylene resin of Example 1 which was the core-component resin, the drawing was not able to be performed.

Using the obtained yarn as the binder fiber, a cable was prepared with the same method as that of Example 1, and various evaluations were performed. Preparation methods and various evaluation results are collectively shown in Table 2.

As shown in Table 2, the transmission loss of the cable characteristics was at a low level of 0.22 dB/km; and the adhesion between the binder fibers or between the binder fiber and the optical fiber cores due to heat generated during integration into a cable was not observed. However, the sheath-component resin was not integrated, and the discriminability between the optical fiber units was poor. Furthermore, regarding the shape retaining properties after integration into a cable, the optical fiber cores were scattered. Accordingly, the workability was poor.

Comparative Example 4

A binder fiber was prepared with the same method as that of Example 1, except that a non-drawn yarn of core-sheath composite fiber having a fineness of 3330 dtex was drawn to 11 times; and a flat sea-island color composite fiber having a fineness of 324 dtex, a width of 0.3 mm, and a thickness of 0.05 mm was obtained by fusion and integration. Using the prepared binder fiber, the evaluation was performed. In the obtained binder fiber, the melting start temperature of the sea component was 110°C, the melting peak temperature of the sea component was 124°C, and the thermal shrinkage rate after curing at 100°C for 3 hours was 0.43%. However, since the width of the binder fiber was narrow, it is difficult to distinguish between the individual optical fiber units.

Using the obtained binder fiber, a cable was prepared using the same method as that of Example 1, and various evaluations were performed. Preparation methods and various evaluation results are collectively shown in Table 2.

As shown in Table 2, regarding the shape retaining properties after integration into a cable, the optical fiber cores were not scattered; the transmission loss of the cable characteristics was at a low level of 0.20 dB/km; and the adhesion between the binder fibers or between the binder fiber and the optical fiber cores due to heat generated during integration into a cable was not observed. However, the discriminability between the optical fiber units was poor.

Comparative Example 5

A binder fiber was prepared using the same method as that of Example 1, except that a non-drawn yarn of core-sheath composite fiber having a fineness of 27521 dtex was drawn to 11 times; and a flat sea-island color composite fiber having a fineness of 2519 dtex, a width of 3.3 mm, and a thickness of 0.18 mm was obtained by fusion and integration. Using the prepared binder fiber, the evaluation was performed. In the obtained binder fiber, the melting start temperature of the sea component was 109°C, the melting peak temperature of the sea component was 125°C, and the thermal shrinkage rate after curing at 100°C for 3 hours was 0.83%. However, the width of the binder fiber was narrow, and thus when a bundle of optical fiber cores was bound by the binder fiber, it is difficult to perform the spiral winding with an accurate angle of 10° without slack. Therefore, swelling and corrugation occur due to slack at a width end portion of the binder fiber. The binder fiber pressed the optical fiber, and thus the transmission loss of the optical fiber deteriorated.

Using the obtained binder fiber, a cable was prepared with the same method as that of Example 1, and various evaluations were performed. Preparation methods and various evaluation results are collectively shown in Table 2.

As shown in Table 2, the discriminability between the optical fiber units was superior; regarding the shape retaining properties after integration into a cable, the optical fiber cores were not scattered; and the workability was superior. In addition, the adhesion between the binder fibers or between the binder fiber and the optical fiber cores due to heat generated during integration into a cable was not observed. However, the transmission loss of the cable characteristics was at a high level of 0.35 dB/km.

Comparative Example 6

A binder fiber was prepared with the same method as that of Example 1, except that, using a vacuum heating device, this fiber was annealed at a temperature of 70°C for 30 hours; and a flat sea-island color composite fiber having a fineness of 1322 dtex, a width of 2.4 mm, and

a thickness of 0.11 mm was obtained by fusion and integration. Using the prepared binder fiber, the evaluation was performed. In the obtained binder fiber, the melting start temperature of the sea component was 112°C, and the melting peak temperature of the sea component was 126°C. However, the thermal shrinkage rate after curing at 100°C for 3 hours was extremely high at 1.20%.

Using the obtained binder fiber, a cable was prepared with the same method as that of Example 1, and various evaluations were performed. Preparation methods and various evaluation results are collectively shown in Table 2.

As shown in Table 2, the discriminability between the optical fiber units was superior; regarding the shape retaining properties after integration into a cable, the optical fiber cores were not scattered; and the workability was superior. In addition, the adhesion between the binder fibers or between the binder fiber and the optical fiber cores due to heat generated during integration into a cable was not observed. However, the transmission loss of the cable characteristics was at a high level of 0.37 dB/km. The reason is as follows. Due heat of the jacket resin coating during integration into a cable, the binder fiber was shrunk, the optical fiber was pressed, and the transmission loss was increased and deteriorated.

Comparative Example 7

A binder fiber was prepared with the same method as that of Example 1, except that linear low-density polyethylene (manufactured by Prime Polymer Co., Ltd., grade name: 1018G) having a melting point of 113°C was used as the sheath-component resin; a non-drawn yarn of core-sheath composite fiber having a fineness of 14360 dtex was drawn to 11 times in one stage under a vapor pressure of 0.40 MPa (absolute pressure) and a saturation vapor pressure at 145°C; using a vacuum heating device, the fiber was annealed at a temperature of 110°C for 30 hours; and a flat sea-island color composite fiber having a fineness of 1308 dtex, a width of 2.4 mm, and a thickness of 0.10 mm was obtained by fusion and integration. Using the prepared binder fiber, an evaluation was performed.

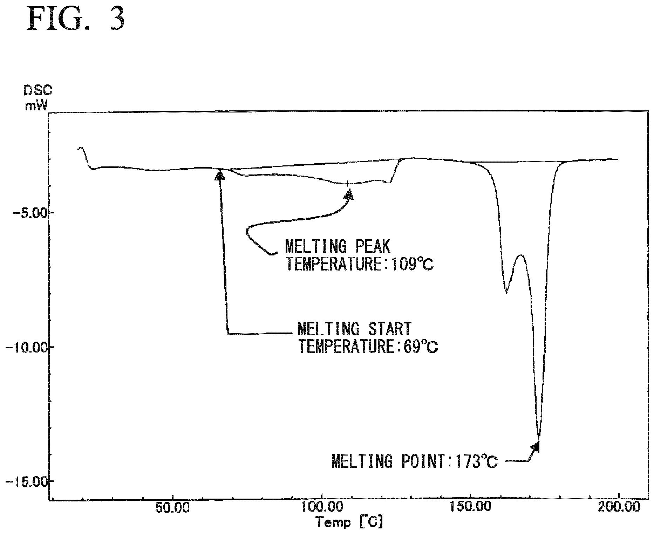

In the obtained binder fiber, as illustrated in a DSC chart of FIG. 3, the melting start temperature of the sea component was 69°C, the melting peak temperature of the sea component was 109°C, the melting point of the island component was 173°C, and the thermal shrinkage rate after curing at 100°C for 3 hours was 0.76%.

Using the obtained binder fiber, a cable was prepared with the same method as that of Example 1, and various evaluations were performed. Preparation methods and various evaluation results are collectively shown in Table 2.

As shown in Table 2, the shape retaining properties after integration into a cable was superior because the optical fiber cores were not scattered; and the transmission loss of the cable characteristics was at a low level of 0.20 dB/km. However, due heat of the jacket resin coating during integration into a cable, the adhesion between the binder fibers of adjacent units or between the binder fiber and the optical fiber was observed. As a result, the discriminability between the units and the workability were significantly poor.

[Table 2](1/4)

| Item | | | | Comparative Example 1 | Comparative Example 2 | Comparative Example 3 | Comparative Example 4 |
|---|---|---|---|---|---|---|---|
| Composition of Core-Sheath Composite Fiber | Sheath-component | Kind | | co-PP | co-PP | co-PP | co-PP |
| | | Manufacturer Name | | Japan Polypropylene Corporation | Japan Polypropylene Corporation | SunAllomer Ltd. | Japan Polypropylene Corporation |
| | | Grade | | WINTEC WSX02 | WINTEC WSX02 | PM923V | WINTEC WSX02 |
| | | Melting Point (°C) | | 125 | 125 | 156 | 125 |
| | | MB Color | | None | Blue | Blue | Blue |
| | | Amount (%) of MB Added | | None | 5 | 5 | 5 |
| | Core Component | Kind | | PP | PP | PP | PP |
| | | Manufacturer Name | | Prime Polymer Co., Ltd. | Prime Polymer Co., Ltd. | Prime Polymer Co., Ltd. | Prime Polymer Co., Ltd. |
| | | Grade | | S135 | S135 | S135 | S135 |
| | | Melting Point(°C) | | 169 | 169 | 169 | 169 |
| | | MB Color | | Blue | None | None | None |
| | | Amount (%) of MB Added | | 5 | None | None | None |
| | Melting Point of Core-Component Resin-Melting Point of Sheath-Component Resin (°C) | | | 44 | 44 | 13 | 44 |
| Preparation Conditions of Binder Fiber | Drawing Conditions | Vapor Drawing | Vapor Pressure (Mpa) | 0.52 | 0.24 | 0.52 | 0.52 |
| | | | Temperature | 154 | 120 | 154 | 154 |
| | | Dry Hot Drawing | Temperature (°C) | None | None | None | None |
| | Roller Press | Pressure (Mpa) | | 0.35 | 0.35 | 0.35 | 0.35 |
| | | Temperature (°C) | | 150 | 110 | 150 | 150 |
| | Emboss Processing | Embossing Shape | | - | - | - | - |
| | | Press Pressure (Mpa) | | - | - | - | - |

(continued)

| Item | | Comparative Example 1 | Comparative Example 2 | Comparative Example 3 | Comparative Example 4 |
|---|---|---|---|---|---|
| Annealing | Vacuum Degree: 0.05 Mpa, Temperature (°C) ×Time (h) | 125°C×30h | 110°C×30h | 125°C×30h | 125°C×30h |

[Table 2] (2/4)

| Item | | | | Comparative Example 5 | Comparative Example 6 | Comparative Example 7 |
|---|---|---|---|---|---|---|
| Composition of Core-Sheath Composite Fiber | Sheath-component | Kind | | co-PP | co-PP | LLDPE |
| | | Manufacturer Name | | Japan Polypropylene Corporation | Japan Polypropylene Corporation | Prime Polymer Co., Ltd. |
| | | Grade | | WINTEC WSX02 | WINTEC WSX02 | 1018G |
| | | Melting Point (°C) | | 125 | 125 | 113 |
| | | MB Color | | Blue | Blue | Blue |
| | | Amount (%) of MB Added | | 5 | 5 | 5 |
| | Core Component | Kind | | PP | PP | PP |
| | | Manufacturer Name | | Prime Polymer Co., Ltd. | Prime Polymer Co., Ltd. | Prime Polymer Co., Ltd. |
| | | Grade | | S135 | S135 | S135 |
| | | Melting Point (°C) | | 169 | 169 | 169 |
| | | MB Color | | None | None | None |
| | | Amount (%) of MB Added | | None | None | None |
| | Melting Point of Core-Component Resin-Melting Point of Sheath-Component Resin (°C) | | | 44 | 44 | 56 |
| Preparation Conditions of Binder Fiber | Drawing Conditions | Vapor Drawing | Vapor Pressure (Mpa) | 0.52 | 0.52 | 0.4 |
| | | | Temperature | 154 | 154 | 145 |
| | | Dry Hot Drawing | Temperature (°C) | None | None | None |
| | Roller Press | Pressure (Mpa) | | 0.35 | 0.35 | 0.35 |
| | | Temperature (°C) | | 150 | 150 | 150 |
| | Emboss Processing | Embossing Shape | | - | - | - |
| | | Press Pressure (Mpa) | | - | - | - |
| | Annealing | Vacuum Degree: 0.05 Mpa, Temperature (°C) ×Time (h) | | 125°C×30h | 70°C×30h | 110°C×30h |

[Table 2] (3/4)

| Item | | | Comparative Example 1 | Comparative Example 2 | Comparative Example 3 | Comparative Example 4 |
|---|---|---|---|---|---|---|
| Evaluation of Binder Fiber | Basic Physical Properties | Fineness (dTex) | 1330 | 1308 | 1327 | 324 |
| | | Melting Peak Temperature (°C) of Sea Component | 125 | 144 | 170 | 124 |
| | | Melting Start Temperature (°C) of Sea Component | 109 | 110 | 155 | 110 |
| | | Integration of Sheath Component | ○ | X | X | ○ |
| | | Width (mm) | 2.4 | 1.7 | 1.9 | 0.3 |
| | | Thickness (mm) | 0.12 | 0.13 | 0.13 | 0.05 |
| | | Thermal Shrinkage Rate (%; 100°C×3h) | 0.47 | 0.69 | 0.71 | 0.43 |
| Evaluation of Cable | Discriminability | Visual Inspection | X | Δ | Δ | Δ |
| | Shape retaining properties | Terminal State | ○ | X | X | ○ |
| | Non Adhesion | Whether or Not There was Adhesion | ○ | ○ | ○ | ○ |
| | Transmission bss | (dB/km) Wavelength: 155 μm | 0.20 | 0.22 | 0.22 | 0.20 |

[Table 2] (4/4)

| Item | | | Comparative Example 5 | Comparative Example 6 | Comparative Example 7 |
|---|---|---|---|---|---|
| Evaluation of Binder Fiber | Basic Physical Properties | Fineness (dTex) | 2519 | 1322 | 1308 |
| | | Melting Peak Temperature (°C) of Sea Component | 125 | 126 | 109 |
| | | Melting Start Temperature (°C) of Sea Component | 109 | 112 | 69 |
| | | Integration of Sheath Component | ○ | ○ | O |
| | | Width (mm) | 3.3 | 2.4 | 2.4 |
| | | Thickness (mm) | 0.18 | 0.11 | 0.1 |
| | | thermal Shrinkage Rate (%; 100°C×3h) | 0.83 | 1.2 | 0.76 |
| Evaluation of Cable | Discriminability | Visual Inspection | ○ | ○ | X |
| | Shape retaining properties | Terminal State | ○ | ○ | ○ |
| | Non-Adhesion | Whether or Not There was Adhesion | ○ | ○ | X |
| | Transmission loss | (dB/km) Wavelength: 155 μm | 0.35 | 0.37 | 0.20 |

In Table 2, evaluation symbols are the same as those in Table 1.

Industrial Applicability

The binder fiber for an optical fiber unit according to the present invention has functions which are superior in, for example, color developing properties which can make optical fiber units distinguishable even in a dark place, shape retaining properties as an optical fiber unit, low transmission loss, and non-adhesion between the binder fibers or with the optical fiber cores. In addition, this binder fiber can be efficiently used as a binder fiber for an optical fiber unit constituting an optical cable.

**Claims**

1.    A binder fiber (10) for an optical fiber unit (20), the binder fiber comprising:

a flat sea-island color composite fiber that includes a sea component (1) and an island component (2), wherein the flat sea-island color composite fiber is composed of a bundle of a plurality of core-sheath color composite spun fibers, which are comprised of thermoplastic resins, the thermoplastic resins includes a sheath-component resin and a core-component resin, the core component resin having a melting point which is higher than a melting point of the sheath-component resin by 20°C or more,
the sea component (1) is formed of fused and integrated sheath-component resin of the bundle, suitable to have been made by drawing the bundle at a temperature which is the melting point of the sheath component resin or higher and lower than the melting point of the core component resin, the island component (2) is composed of fibers formed of the core-component resin, the fibers being dispersed in the sea component (1) in an island shape, and
the flat sea-island color composite fiber satisfies the following (1) to (3):

(1) the sea component (1) of the flat sea-island color composite fiber has a melting start temperature of 100°C or higher and a melting peak temperature of 120°C to 150°C;

(2) the flat sea-island color composite fiber has a width of 0.5 mm to 3.0 mm and a thickness of 0.15 mm or less; and

(3) the flat sea-island color composite fiber has a thermal shrinkage rate of 1.0% or lower after being heated at 100°C for 3 hours.

2. The binder fiber (10) for an optical fiber unit (20) according to claim 1,
wherein the core-sheath color composite spun fiber further includes a pigment which is mixed with the sheath-component resin and colors the core-sheath color composite spun fiber.

3. The binder fiber (10) for an optical fiber unit (20) according to claim 1 or 2,
wherein the sheath-component resin of the core-sheath color composite spun fiber is a single compound or a mixture of two or more compounds selected from polyethylene, two-component copolymers of ethylene or butene and propylene, and three-component polymers of ethylene, butene, and propylene, and
the core-component resin is one selected from crystalline polypropylene, polyethylene terephthalate, and polyamide.

4. The binder fiber (10) for an optical fiber unit (20) according to any one of claims 1 to 3,
wherein the sheath-component resin of the core-sheath color composite spun fiber is an ethylene-propylene random copolymer which is obtained by polymerization using a metallocene catalyst.

**Patentansprüche**

1. Eine Bindefaser (10) für eine Glasfasereinheit (20), wobei die Bindefaser umfasst:

eine flache farbige See-Insel-Verbundfaser, welche eine See-Komponente (1) und eine Insel-Komponente (2) enthält,
wobei die flache farbige See-Insel-Verbundfaser sich aus einem Bündel von einer Vielzahl von gesponnenen Kern-Mantel-Verbundfasern zusammensetzt, welche thermoplastische Harze umfasst, wobei die thermoplastischen Harze ein Mantel-Komponenten-Harz und ein Kern-Komponenten-Harz enthalten, wobei das Ker-Komponenten-Harz einen Schmelzpunkt aufweist, welcher um 20°C oder mehr höher ist als der Schmelzpunkt des Mantel-Komponenten-Harzes,
wobei die See-Komponente (1) von fusioniertem und integriertem Mantel-Komponenten-Harz des Bündels ausgebildet wird, welches in geeigneter Weise durch Ziehen des Bündels bei einer Temperatur hergestellt wird, welche der Schmelzpunkt des Mantel-Komponenten-Harzes oder höher ist und niedriger ist als der Schmelzpunkt des Kern-Komponenten-Harzes,
wobei die Insel-Komponente (2) sich aus Fasern zusammensetzt, die aus dem Kern-Komponenten-Harz gebildet werden, wobei die Fasern in der See-Komponente (1) in einer Inselform verteilt sind, und
die flache farbige See-Insel-Verbundfaser Folgendem (1) bis (3) genügt:

(1) die See-Komponente (1) der flachen farbigen See-Insel-Verbundfaser eine Anfangsschmelztemperatur von 100°C oder höher und eine Peak-Schmelztemperatur von 120°C bis 150°C aufweist;
(2) die flache farbige See-Insel-Verbundfaser eine Breite von 0,5 mm bis 3,0 mm und eine Dicke von 0,15 mm oder weniger aufweist; und
(3) die flache farbige See-Insel-Verbundfaser eine thermische Schrumpfungsrate von 1,0% oder weniger nach Erhitzen bei 100 °C für 3 Stunden aufweist.

2. Verbundfaser (10) für eine optische Fasereinheit (20) gemäß Anspruch 1, wobei die gesponnene farbige Kern-Mantel-Verbundfaser des Weiteren ein Pigment enthält, welches mit dem Mantel-Komponenten-Harz vermischt ist und die gesponnene farbige Kern-Mantel-Verbundfaser färbt.

3. Verbundfaser (10) für eine optische Fasereinheit (20) gemäß Anspruch 1 oder 2, wobei das Mantel-Komponenten-Harz der gesponnenen farbigen Kern-Mantel-Verbundfaser eine einzelne Komponente ist oder eine Mischung von zwei oder mehr Komponenten, ausgewählt von Polyethylen, Zweikomponenten-Copolymeren von Ethylen oder Buten und Propylen und Dreikomponenten-Polymeren von Ethylen, Buten und Propylen, und das Kern-Komponenten-Harz eines ist ausgewählt aus kristallinem Polypropylen, Polyethylen Terephthalat und Polyamid.

4. Verbundfaser (10) für eine optische Fasereinheit (20) gemäß einem der Ansprüche 1 bis 3, wobei das Mantel-

## EP 2 884 320 B1

Komponenten-Harz der gesponnenen farbigen Kern-Mantel-Verbundfaser ein zufälliges Ethylen-Propylen Copolymer ist, welches durch Polymerisation unter Verwendung eines Metallocen-Katalysators erhalten wird.

**Revendications**

1. Fibre liante (10) pour une unité de fibre optique (20), la fibre liante comprenant :

   une fibre composite colorée plate de type mer-île qui comprend un composant de mer (1) et un composant d'île (2),
   dans laquelle la fibre composite colorée plate de type mer-île est composée d'un faisceau d'une pluralité de fibres câblées composites colorées de type âme-gaine qui sont composées de résines thermoplastiques,
   les résines thermoplastiques comprennent une résine de composant de gaine et une résine de composant d'âme, la résine de composant d'âme ayant un point de fusion qui est plus haut qu'un point de fusion de la résine de composant de gaine de 20 °C ou plus,
   le composant de mer (1) est formé de résine de composant de gaine fusionnée et intégrée du faisceau, adaptée pour avoir été faite en tirant le faisceau à une température qui est le point de fusion de la résine de composant de gaine ou plus haute ou plus basse que le point de fusion de la résine de composant d'âme,
   le composant d'île (2) est composé de fibres formées de la résine de composant d'âme, les fibres étant dispersées dans le composant de mer (1) dans une forme d'île, et
   la fibre composite colorée plate de type mer-île satisfait les points (1) à (3) suivants :

   (1) le composant de mer (1) de la fibre composite colorée plate de type mer-île a une température de départ de fusion de 100 °C ou plus haute et une température de pic de fusion de 120 °C à 150 °C ;
   (2) la fibre composite colorée plate de type mer-île a une largeur de 0,5 mm à 3,0 mm et une épaisseur de 0,15 mm ou moins ; et
   (3) la fibre composite colorée plate de type mer-île a un taux de contraction par refroidissement de 1,0 % ou moins après avoir été chauffée à 100 °C pendant 3 heures.

2. Fibre liante (10) pour une unité de fibre optique (20) selon la revendication 1, dans laquelle la fibre câblée composite colorée de type âme-gaine inclut un pigment qui est mélangé avec la résine de composant de gaine et colore la fibre câblée composite colorée de type âme-gaine.

3. Fibre liante (10) pour une unité de fibre optique (20) selon la revendication 1 ou 2, dans laquelle la résine de composant de gaine de la fibre câblée composite colorée de type âme-gaine est un composé unique ou un mélange de deux composés ou plus sélectionnés parmi le polyéthylène, les copolymères à deux composés d'éthylène ou de butène et de propylène et les polymères à trois composants d'éthylène, de butène et de propylène, et
   la résine de composant d'âme est un sélectionné parmi le polypropylène cristallin, le téréphtalate de polyéthylène et le polyamide.

4. Fibre liante (10) pour une unité de fibre optique (20) selon l'une quelconque des revendications 1 à 3,
   dans laquelle la résine de composant d'âme de la fibre câble composite colorée de type âme-gaine est un copolymère aléatoire d'éthylène propylène qui est obtenu par polymérisation à l'aide d'un catalyseur métallocène.

## FIG. 1

## FIG. 2

# FIG. 3

# FIG. 4

(a)

(b)

(1) SEA COMPONENT

(2) ISLAND COMPONENT

# FIG. 5

(a-1)

(a-2)

(b)

# FIG. 6

# FIG. 7

**EP 2 884 320 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20020034367 A1
- JP H09049950 B
- JP 2007233252 A
- US 2002034367 A1
- JP 2011242592 A
- EP 1731641 A1